# EUROPEAN PATENT APPLICATION

(11) **EP 4 357 771 A1**
(43) Date of publication of application: **24.04.2024**
(21) Application number: 21945953.4
(22) Date of filing: 15.06.2021
(51) Int. Cl.: G01N 27/62

(54) **SAMPLE LIQUID ATOMIZATION DEVICE AND ANALYSIS DEVICE**

(71) Applicant: HITACHI HIGH-TECH CORPORATION, Tokyo 105-6409 (JP)
(72) Inventor: MIYASAKA, Tooru, Tokyo 100-8280 (JP); TERUI, Yasushi, Tokyo 105-6409 (JP); HORIE, Masazumi, Tokyo 105-6409 (JP); KITAUCHI, Daisuke, Tokyo 100-8280 (JP); SHIBATA, Toru, Tokyo 100-8280 (JP)
(74) Representative: MERH-IP Matias Erny Reichl Hoffmann Patentanwälte PartG mbB
(86) International application number: PCT/JP2021/022715
(87) International publication number: WO 2022/264274

(57) **Abstract**

A sample liquid atomization device according to the present invention includes: an ultrasonic sample liquid atomization unit (5) including an exciting part (3) that emits ultrasonic vibration, a vibration surface (1) to be excited by the exciting part (3), a vibration member (2) including the vibration surface (1), and a pipe (7a) that supplies a sample liquid (7) to the vibration surface (1), the ultrasonic sample liquid atomization unit (5) atomizing the sample liquid (7) supplied to the vibration surface (1) by the ultrasonic vibration of the vibration surface (1); and a first pipeline part (10) that is a tubular member. The first pipeline part (10) extends in a direction of the ultrasonic vibration of the vibration surface (1). The ultrasonic sample liquid atomization unit (5) is provided inside the first pipeline part (10) and supported by a holding member (11) in the first pipeline part (10).

## Description

### Technical Field

The present invention relates to a sample liquid atomization device that atomizes a sample liquid, and an analysis device including the sample liquid atomization device.

### Background Art

In order to analyze a liquid (sample liquid) containing a sample component, a device that separates a liquid component in the sample liquid and introduces the liquid component into an analysis part is used. As a typical example of an analysis device that separates and analyzes a sample component contained in a sample liquid, there is provided a liquid chromatography-mass spectrometer.

In the liquid chromatography-mass spectrometer, a sample liquid containing various components separated by liquid chromatography is formed into microdroplets, and charged, and heated and vaporized to generate ions of sample components to be analyzed. Then, the ionized sample components are introduced into a vacuum and separated for each mass-to-charge ratio to identify the components. Examples of a method for realizing this processing include electrospray ionization (ESI), atmospheric pressure chemical ionization (APCI), and atmospheric pressure photoionization (APPI) . These methods use an atmospheric pressure spray method for forming microdroplets, although the methods differ in charging and heating manners. Although as a method other than the atmospheric pressure spray method, a method using ultrasonic waves is also known, there remain many problems and the method has not yet been put to practical use.

Patent Literature 1 discloses a technique for forming finer droplets by combining an atmospheric pressure spray method and an ultrasonic oscillator.

Patent Literature 2 discloses a technique for atomizing a sample liquid by exciting a sample liquid stored in a container with an ultrasonic oscillator to form droplets.

Non-Patent Literature 1 recites the Lang equation indicating a relationship between a droplet diameter formed by an ultrasonic wave and a vibration frequency of the ultrasonic wave.

### Citation List

### Patent Literatures

PTL 1: JP H11-051902 A
PTL 2: JP 2015-031650 A

### Non Patent Literature

NPL 1: R. J. Lang, Journal of the Acoustical Society of America, 1962, Vol. 34, p. 6

### Summary of Invention

### Technical Problem

The atmospheric pressure spray method used in a conventional liquid chromatography-mass spectrometer is a method of dividing a liquid into droplets by introducing the liquid into a high speed jet. An atmospheric pressure spray used in a liquid chromatography-mass spectrometer is required to divide a sample liquid into microdroplets having an average particle size of several um to several 10 um. For this reason, it is necessary to use ultrahigh-speed gas jets close to or exceeding a sound velocity.

A droplet formed by such an ultrahigh-speed gas jet is likely to have an unstable particle size and a wide particle size distribution. A particle size of formed droplets and a particle size distribution thereof also affect charging required for ionization and a subsequent vaporization process. For this reason, when the particle size of the droplet is unstable to make the particle size distribution wide, a state of ions of formed component to be analyzed becomes unstable. Furthermore, since droplets formed by an ultrahigh-speed gas jet are flying at an ultrahigh speed, it is difficult to secure a heating time, and the droplets are generally heated at a high temperature of 500 °C or higher in order to vaporize the droplets.

As described above, an ionization method for a sample component for use in the atmospheric pressure spray method used in a conventional liquid chromatography-mass spectrometer requires an ultrahigh-speed gas jet and a high temperature, resulting in making a device complicated and large-scaled. Therefore, an ionization method for a sample component using a method other than the atmospheric pressure spray method is required.

On the other hand, as another method for converting a liquid into microdroplets, an ultrasonic atomization method using ultrasonic waves is known. Forming microdroplets from a liquid by ultrasonic waves, so-called atomization, is widely used in various fields such as an ultrasonic humidifier and painting. However, use of the ultrasonic atomization method in a sample liquid analysis device such as a liquid chromatography-mass spectrometer involves the following problems.

First, a liquid containing different sample components is continuously fed from liquid chromatography to a sample liquid atomization device through a thin tube having a diameter of several 100 um or less. An amount of each sample liquid to be fed is an extremely small amount of several 100 µL or less. These sample liquids are required to be continuously atomized without being mixed with a sample liquid containing different sample components. Furthermore, atomized droplets need to be charged, and heated and vaporized, and then fed to an analysis part. Therefore, it is required to handle a small amount of an atomized sample liquid with high accuracy. In addition, in order to easily and stably perform heating vaporization, it is advantageous that the droplets are finer.

A particle size of a droplet formed by ultrasonic waves is affected by a vibration frequency of the ultrasonic waves together with liquid physical properties. It is known that a relationship between a vibration frequency and a particle size generally follows the Lang equation (Non Patent Literature 1). In a liquid chromatography-mass spectrometer, water or alcohol is used as a solvent of a sample liquid. According to the Lang equation, an excitation frequency for forming a droplet having a particle size of about 10 um by exciting water or alcohol is about 200 to 300 kHz, and an excitation frequency for forming a droplet having a particle size of 1 to 3 um is several MHz.

In general, since an ultrasonic oscillator such as a piezoelectric element has a small amplitude of vibration, it is difficult to directly divide and atomize a liquid. Therefore, the amplitude is expanded using a resonance phenomenon of a metal column, a diaphragm structure, or the like to obtain vibration having an acceleration enabling a liquid to be divided. Since a typical excitation device for a droplet forming device using ultrasonic vibration uses resonant vibration of metal, the vibration frequency has a limit of about several 100 kHz. As described above, a droplet diameter sprayed by an atmospheric pressure spray for use in a conventional mass spectrometer is about several um to several 10 um. In addition, as described using the Lang equation, a droplet diameter obtained by atomization by ultrasonic vibration of several 100 kHz is also similar. From the foregoing reasons, it is in practice difficult to form finer droplets by combining an atmospheric pressure spray method and an ultrasonic oscillator.

Patent Literature 1 discloses a configuration in which a sample droplet is atomized in a relatively wide chamber, and then the atomized sample droplet is transported by an air flow to a solvent removing chamber connected by a pipe whose flow path is narrowed, and then transported to an analysis device by an air flow. In such configuration in which a plurality of chambers are connected by the pipe, a flow of an air flow becomes unstable, and thus, it is highly possible that atomized sample droplets adhere to a wall surface or the like. Furthermore, it can be easily inferred that it is also highly possible that sample liquids containing different sample components and continuously supplied are mixed with each other.

Furthermore, another problem in an ultrasonic oscillator is heat generation during operation. When a temperature of an ultrasonic oscillator increases, sufficient vibration cannot be obtained, and the ultrasonic oscillator may be broken. Patent Literature 1 discloses a method of cooling an ultrasonic oscillator with a Peltier element by bringing a heat conducting member into contact with the ultrasonic oscillator. However, this method has problems that cooling makes a configuration complicated, ultrasonic vibration is affected by contact of a heat conducting member, and a Peltier element for cooling requires a large amount of power.

In the technique disclosed in Patent Literature 2, an applied exciting force is amplified using a liquid itself to be excited, and a part of the liquid is formed into microdroplets, i.e., atomized. In this technique, unlike the above method of increasing an amplitude using a resonance phenomenon of metal or the like, since a sample liquid can be excited at an excitation frequency of several MHz, droplets having an average particle size of about several um can be formed. However, since it is necessary to store a liquid to be irradiated with ultrasonic waves in a container or the like, this technique requires a large amount of the liquid to some extent, so that it is difficult to atomize a small amount of a sample liquid continuously fed from liquid chromatography. In a case where a sample liquid is not stored in a container and a small amount of the sample liquid is excited at an excitation frequency of several MHz, it is expected that the excited sample liquid scatters, making it more difficult to stably form microdroplets.

An object of the present invention is to provide a sample liquid atomization device capable of stably forming a sample liquid into droplets, and an analysis device including the sample liquid atomization device.

### Solution to Problem

A sample liquid atomization device according to the present invention includes: an ultrasonic sample liquid atomization unit including: an exciting part that emits ultrasonic vibration; a vibration surface to be excited by the exciting part; a vibration member including the vibration surface; and a pipe that supplies a sample liquid to the vibration surface, the ultrasonic sample liquid atomization unit atomizing the sample liquid supplied to the vibration surface by the ultrasonic vibration of the vibration surface; and includes a first pipeline part that is a tubular member. The first pipeline part extends in a direction of the ultrasonic vibration of the vibration surface. The ultrasonic sample liquid atomization unit is provided inside the first pipeline part and supported by a holding member in the first pipeline part.

An analysis device according to the present invention includes the sample liquid atomization device according to the present invention.

### Advantageous Effects of Invention

According to the present invention, it is possible to provide a sample liquid atomization device capable of stably forming a sample liquid into droplets, and an analysis device including the sample liquid atomization device.

### Brief Description of Drawings

[FIG. 1] FIG. 1 is a view illustrating an analysis device according to an embodiment of the present invention.
[FIG. 2A] FIG. 2A is a view showing the vicinity of a vibration surface of an ultrasonic sample liquid atomization unit.
[FIG. 2B] FIG. 2B is an enlarged view of the vicinity of the vibration surface.
[FIG. 2C] FIG. 2C is a view of the vibration surface illustrated in FIG. 2B as viewed from above.
[FIG. 3A] FIG. 3A is a view showing a configuration of the vibration surface including a replaceable mesh thin plate, and is a view showing a configuration in which the mesh thin plate is held by a plate-shaped elastic body.
[FIG. 3B] FIG. 3B is a view showing the configuration of the vibration surface including the replaceable mesh thin plate, and is a view showing a configuration in which the mesh thin plate is held by a cap-shaped elastic body.
[FIG. 4A] FIG. 4A is a view illustrating a configuration example of an atomization unit holding member, and is a view of the holding member that holds the ultrasonic sample liquid atomization unit in a floating state.
[FIG. 4B] FIG. 4B is a view illustrating another configuration example of the atomization unit holding member, and is a view of the holding member that holds the ultrasonic sample liquid atomization unit in the floating state.
[FIG. 4C] FIG. 4C is a view illustrating a further configuration example of the atomization unit holding member, and is a view of the holding member that holds the ultrasonic sample liquid atomization unit in the floating state.
[FIG. 4D] FIG. 4D is a view illustrating a further configuration example of the atomization unit holding member, and is a view of the holding member that holds the ultrasonic sample liquid atomization unit at a position opposite to a vibration surface with respect to an exciting part.
[FIG. 5] FIG. 5 is a view showing one example of an ultrasonic sample liquid atomization unit including a cooling structure.
[FIG. 6A] FIG. 6A is a view illustrating an example of a configuration of a second pipeline part 3, in which a length of the second pipeline part can be shortened.
[FIG. 6B] FIG. 6B is a view showing a cross section taken along line A-A in FIG. 6A.
[FIG. 6C] FIG. 6C is a view showing a cross section taken along line B-B in FIG. 6A.
[FIG. 7A] FIG. 7A is a view illustrating a configuration of a charge applying part including a discharge wire.
[FIG. 7B] FIG. 7B is a view illustrating a configuration of a charge applying part including a needle-shaped member.
[FIG. 7C] FIG. 7C is a view illustrating a configuration of a charge applying part including an ion emission device.
[FIG. 8] FIG. 8 is a view illustrating a configuration of a charge applying part that applies a charge to a sample component contained in a sample droplet at the time of atomizing a sample liquid.

### Description of Embodiments

A sample liquid atomization device according to the present invention can form microdroplets from a small amount of a sample liquid continuously supplied from liquid chromatography or the like, i.e., can atomize, perform processing such as vaporization or charging, and then stably supply the processed sample liquid to an analysis part. An analysis device according to the present invention includes the sample liquid atomization device as an ion source, and can analyze ionized sample components.

The sample liquid atomization device according to the present invention includes, inside a first pipeline part, an ultrasonic sample liquid atomization unit that atomizes a sample liquid, and can continuously atomize the continuously supplied sample liquid by ultrasonic vibration. The ultrasonic sample liquid atomization unit is preferably held by a holding member that prevents vibration of the ultrasonic sample liquid atomization unit from being transmitted to the first pipeline part. In the first pipeline part, a transport gas that transports a sample droplet, which is an atomized sample liquid, in a downstream direction preferably flows in a direction of ultrasonic vibration. This transport gas also has an effect of cooling the ultrasonic sample liquid atomization unit.

When the ultrasonic sample liquid atomization unit is held such that vibration of the ultrasonic sample liquid atomization unit is not transmitted to the first pipeline part, vibration of the first pipeline part can be suppressed to stably realize atomization by the ultrasonic vibration. Furthermore, when the transport gas that transports the sample droplet flows in the direction of the ultrasonic vibration (a spray direction of the sample droplet), the sprayed sample droplet is stably transported on the transport gas inside the first pipeline part, resulting in preventing adhesion to a wall surface of the pipeline part.

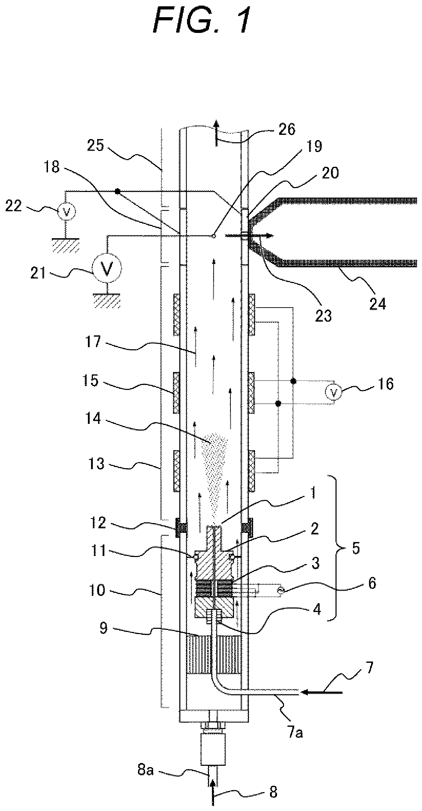

In the following, a sample liquid atomization device and an analysis device according to an embodiment of the present invention will be described with reference to FIGS. 1 to 8.

FIG. 1 is a view illustrating the analysis device according to the embodiment of the present invention. The analysis device according to the present embodiment includes the sample liquid atomization device according to the embodiment of the present invention and an analysis part 24 connected to the sample liquid atomization device, and is, for example, a mass spectrometer. The sample liquid atomization device according to the present embodiment is used as an ion source of the analysis part 24.

The sample liquid atomization device according to the present embodiment includes a sample liquid atomization part that atomizes a sample liquid, a heating vaporization part that heats and vaporizes an atomized sample liquid, and a charge applying part that applies a charge to a sample component of the heated and vaporized sample liquid. In the following, the sample liquid atomization part, the heating vaporization part, and the charge applying part will be described.

### <Sample Liquid Atomization Part>

The sample liquid atomization part includes a first pipeline part 10 and an ultrasonic sample liquid atomization unit 5.

The first pipeline part 10 is a tubular member and includes the ultrasonic sample liquid atomization unit 5 therein. A sample liquid 7 and a transport gas 8 are supplied to the first pipeline part 10. The first pipeline part 10 extends in the direction of the ultrasonic vibration (a direction perpendicular to the vibration surface 1, which is an up-down direction in FIG. 1) of the vibration surface 1 of the ultrasonic sample liquid atomization unit 5.

The ultrasonic sample liquid atomization unit 5 includes an exciting part 3 that emits ultrasonic vibration, a vibration member 2 that amplifies the ultrasonic vibration by the exciting part 3, the vibration surface 1 installed on the vibration member 2, and a pipe 7a through which the sample liquid 7 flows, and atomizes the sample liquid 7 supplied to the vibration surface 1 by the pipe 7a with the ultrasonic vibration of the vibration surface 1.

The exciting part 3 includes stacked piezoelectric elements, and a high-frequency drive circuit 6 is connected to the piezoelectric elements. The drive circuit 6 generates an AC voltage for ultrasonically driving the piezoelectric element. The piezoelectric element is an ultrasonic oscillator, and is driven by the drive circuit 6 at a high frequency to emit ultrasonic vibration.

The vibration member 2 includes the vibration surface 1 at one end, and an exciting part 3 between the one end and an other end, and resonates when the piezoelectric element of the exciting part 3 is driven at a high frequency. The vibration member 2 can be made of, for example, a metal plate.

The vibration surface 1 is provided at the one end of the vibration member 2 and is excited by the exciting part 3. When the vibration member 2 resonates, the vibration surface 1 ultrasonically vibrates in the direction perpendicular to the vibration surface 1 (the up-down direction in FIG. 1).

The pipe 7a is a thin pipe for supplying the sample liquid 7 flowing from, for example, liquid chromatography or the like to the ultrasonic sample liquid atomization unit 5, and is connected to the ultrasonic sample liquid atomization unit 5 via a connection part 4 included in the ultrasonic sample liquid atomization unit 5. The pipe 7a is configured to reach the vibration surface 1 through a cavity provided in a central part inside the ultrasonic sample liquid atomization unit 5 and to supply the sample liquid 7 to the vibration surface 1.

The sample liquid 7 supplied to the vibration surface 1 is divided into microdroplets by the ultrasonic vibration in the direction perpendicular to the vibration surface 1 (the up-down direction in FIG. 1), and is sprayed and discharged in the direction perpendicular to the vibration surface 1 to be atomized. FIG. 1 shows a sample droplet 14 which is the atomized sample liquid 7.

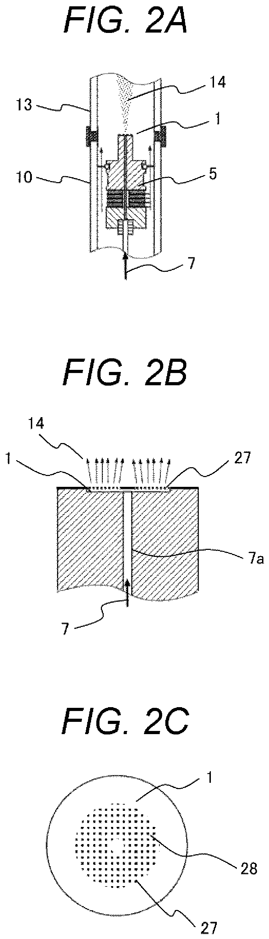

FIGS. 2A to 2C are views for explaining a configuration of a vicinity of the vibration surface 1 of the ultrasonic sample liquid atomization unit 5. FIG. 2A is a view showing the vicinity of the vibration surface 1 of the ultrasonic sample liquid atomization unit 5. FIG. 2B is an enlarged view of the vicinity of the vibration surface 1. FIG. 2C is a view of the vibration surface 1 illustrated in FIG. 2B as viewed from above.

The vibration surface 1 of the ultrasonic sample liquid atomization unit 5 is capable of atomizing the supplied sample liquid 7 by ultrasonic vibration in the direction perpendicular to the vibration surface 1. Note that a small amount of the sample liquid 7 tends to form liquid balls larger than the droplets due to an influence of surface tension of the liquid or the like. Therefore, a part of the sample liquid 7 supplied to the vibration surface 1 may scatter as large liquid balls, and it may be difficult to stably atomize the sample liquid 7.

As shown in FIGS. 2B and 2C, the sample liquid atomization device according to the present embodiment can include a mesh thin plate 27 on a surface of the vibration surface 1 as a configuration capable of stably atomizing the sample liquid 7.

The mesh thin plate 27 is a thin plate-shaped member disposed on the surface of the vibration surface 1, and includes a mesh part having one or more fine holes 28. The mesh thin plate 27 is bonded and fixed to the vibration surface 1. The sample liquid 7 supplied to the vibration surface 1 spreads in a thin liquid film shape between the vibration surface 1 and the mesh thin plate 27, and when the vibration surface 1 ultrasonically vibrates, the sample liquid is atomized and jetted from the fine holes 28 formed in the mesh thin plate 27 to become the sample droplets 14.

Since the vibration surface 1 includes the mesh thin plate 27, the sample liquid 7 is hardly affected by surface tension, so that the sample liquid 7 can be atomized extremely stably.

When the vibration surface 1 includes the mesh thin plate 27, a size of the fine holes 28 formed in the mesh thin plate 27 affects a size of the atomized sample droplets 14. Although the size of the sample droplet 14 formed by the ultrasonic vibration is basically affected by the ultrasonic vibration, use of the mesh thin plate 27 having the holes 28 with a small diameter enables the sample droplet 14 to have a further reduced particle size, and enables formation of the sample droplets 14 having a small variation in particle size.

The vibration surface 1 has a frequency of, for example, about 100 kHz or more. When the sample liquid 7 was atomized by ultrasonic vibration without using the mesh thin plate 27, an average particle size of the sample droplets 14 was about 10 um. However, it has been confirmed that when the mesh thin plate 27 having the hole 28 with a diameter of several um was used, the sample droplets 14 having an average particle size of several um could be generated while suppressing a variation in particle size.

The size and number of the fine holes 28 provided in the mesh thin plate 27 affect an amount of the sample droplets 14 to be formed. Therefore, the size and number of the fine holes 28 need to be designed according to a supply amount of the sample liquid 7 to be supplied.

In addition, the sample liquid 7 containing different sample components may be continuously supplied to the vibration surface 1. When an interval between the vibration surface 1 and the mesh thin plate 27 is large, it is highly possible that the sample liquids 7 containing different sample components continuously supplied are mixed with each other before atomization. Therefore, the interval between the vibration surface 1 and the mesh thin plate 27 is preferably as small as possible. In the present example, a recess is provided on the vibration surface 1 so that the interval between the vibration surface 1 and the mesh thin plate 27 is about 100 um, and the mesh thin plate 27 is bonded and fixed to the recess.

The mesh thin plate 27 may not be bonded and fixed to the vibration surface 1. In the mesh thin plate 27 having the fine holes 28, contamination or clogging of the holes 28 occurs depending on a type of the sample liquid 7 to be analyzed. Therefore, it is practically important to have a configuration in which only the mesh thin plate 27 can be replaced from the ultrasonic sample liquid atomization unit 5.

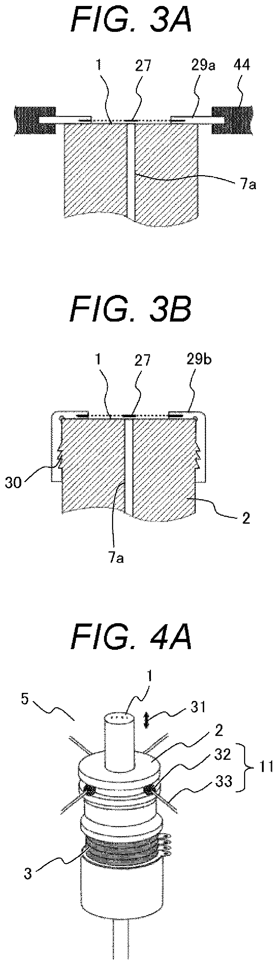

FIGS. 3A and 3B are views illustrating a configuration of the vibration surface 1 including the mesh thin plate 27 replaceable from the ultrasonic sample liquid atomization unit 5.

FIG. 3A is a view illustrating a configuration in which the mesh thin plate 27 is held by a plate-shaped elastic body 29a. The elastic body 29a has a shape that does not hinder spraying of the sample droplet 14, and is supported by a holding frame 44 to hold the mesh thin plate 27. Although not illustrated in FIG. 3A, the holding frame 44 can be joined and fixed to, for example, a wall surface of the first pipeline part 10 or a main body of the ultrasonic sample liquid atomization unit 5. However, the elastic body 29a provided between the mesh thin plate 27 and the holding frame 44 needs to fix the mesh thin plate 27 while appropriately contacting the vibration surface 1. When the contact of the elastic body 29a with the vibration surface 1 is unstable, the sample liquid 7 may leak from the vibration surface 1. In addition, when the elastic body 29a is pressed against the vibration surface 1 more than necessarily, the ultrasonic vibration of the vibration surface 1 may become unstable.

FIG. 3B is a view illustrating a configuration in which the mesh thin plate 27 is held by a cap-shaped elastic body 29b. The cap-shaped elastic body 29b has a shape that does not hinder spraying of the sample droplet 14, and holds the mesh thin plate 27 in a manner of covering the vibration surface 1 and an upper part of the vibration member 2. The vibration member 2 includes a retaining part 30 at the upper part, and fixes the elastic body 29b with the retaining part 30. When the mesh thin plate 27 is held by the cap-shaped elastic body 29b, it is necessary to consider a structure of the retaining part 30 and an influence of the retaining part 30 on vibration. In addition, it is important to design such that the interval between the vibration surface 1 and the mesh thin plate 27 stably becomes a predetermined value even if the mesh thin plate 27 is replaced.

Both the plate-shaped elastic body 29a and the cap-shaped elastic body 29b are attachable to and detachable from the vibration surface 1. By removing the plate-shaped elastic body 29a and the cap-shaped elastic body 29b from the vibration surface 1, the mesh thin plate 27 can be replaced.

In the foregoing, the description has been made of the configuration in which the pipe 7a passes through the cavity provided inside the ultrasonic sample liquid atomization unit 5 to supply the sample liquid 7 to the vibration surface 1 (alternatively, a space between the vibration surface 1 and the mesh thin plate 27) of the ultrasonic sample liquid atomization unit 5 with reference to FIGS. 1 to 3B. The pipe 7a may be configured to supply the sample liquid 7 to the vibration surface 1 (alternatively, the space between the vibration surface 1 and the mesh thin plate 27) without passing through the cavity provided inside the ultrasonic sample liquid atomization unit 5. For example, the pipe 7a may be also configured by a soft thin tube or the like that does not affect the vibration of the vibration surface 1, and configured to reach the vibration surface 1 (alternatively, the space between the vibration surface 1 and the mesh thin plate 27) without passing through the inside of the ultrasonic sample liquid atomization unit 5, and to directly supply the sample liquid 7 to the vibration surface 1.

Returning to FIG. 1, the description of the ultrasonic sample liquid atomization unit 5 will be continued. The ultrasonic sample liquid atomization unit 5 is supported, inside the first pipeline part 10, on an inner wall surface of the first pipeline part 10 by an atomization unit holding member 11. The ultrasonic sample liquid atomization unit 5 is preferably supported by the atomization unit holding member 11 at a radial center of the first pipeline part 10.

The ultrasonic sample liquid atomization unit 5 is preferably held in a floating state by the atomization unit holding member 11. Being held in the floating state means that the ultrasonic sample liquid atomization unit 5 is supported such that ultrasonic vibration of the ultrasonic sample liquid atomization unit 5 is not transmitted to the first pipeline part 10. In other words, the atomization unit holding member 11 that holds the ultrasonic sample liquid atomization unit 5 in the floating state is configured to support the ultrasonic sample liquid atomization unit 5 so that the ultrasonic vibration of the ultrasonic sample liquid atomization unit 5 is not transmitted to the first pipeline part 10.

The atomization unit holding member 11 connects the vibration member 2 of the ultrasonic sample liquid atomization unit 5 and the wall surface of the first pipeline part 10 to fix the ultrasonic sample liquid atomization unit 5 to the first pipeline part 10. The atomization unit holding member 11 that holds the ultrasonic sample liquid atomization unit 5 in the floating state is a member having a sufficiently low natural frequency with respect to a vibration frequency of the ultrasonic sample liquid atomization unit 5, and is a member that softly holds the ultrasonic sample liquid atomization unit 5 with low rigidity. When the atomization unit holding member 11 has a soft holding structure with low rigidity, the ultrasonic vibration of the ultrasonic sample liquid atomization unit 5 is hardly transmitted to the first pipeline part 10, so that the atomization unit holding member 11 can hold the ultrasonic sample liquid atomization unit 5 in the floating state or a state close to the floating state.

When the ultrasonic sample liquid atomization unit 5 is held in the floating state by the atomization unit holding member 11, vibration energy of the exciting part 3 can be efficiently transmitted to the vibration surface 1, so that the sample liquid 7 can be atomized stably and efficiently with low energy.

FIGS. 4A to 4D are views illustrating configuration examples of the atomization unit holding member 11. FIGS. 4A to 4C are views illustrating the configuration examples of the atomization unit holding member 11 that holds the ultrasonic sample liquid atomization unit 5 in the floating state. FIGS. 4A to 4D also illustrate a direction 31 of the ultrasonic vibration of the vibration surface 1.

The atomization unit holding member 11 illustrated in FIG. 4A is the atomization unit holding member 11 that holds the ultrasonic sample liquid atomization unit 5 in the floating state, and includes a thin bar-shaped member 33, and a spherical elastic rubber 32 provided at a tip of the bar-shaped member 33, and has flexibility and elasticity. The thin bar-shaped member 33 and the elastic rubber 32 are elastic members having lower rigidity than the vibration member 2.

Since the atomization unit holding member 11 illustrated in FIG. 4A includes the elastic rubber 32, the ultrasonic sample liquid atomization unit 5 can be held such that the ultrasonic vibration generated in the ultrasonic sample liquid atomization unit 5 is not transmitted to the first pipeline part 10. Further, in the atomization unit holding member 11 shown in FIG. 4A, since the bar-shaped member 33 provided with the elastic rubber 32 at the tip is thin, the bar-shaped member 33 is likely to bend in the ultrasonic vibration direction 31. Because of including the elastic rubber 32 and the thin bar-shaped member 33 and having flexibility and elasticity, the atomization unit holding member 11 in FIG. 4A can hold the ultrasonic sample liquid atomization unit 5 in the floating state or in a state extremely close to the floating state.

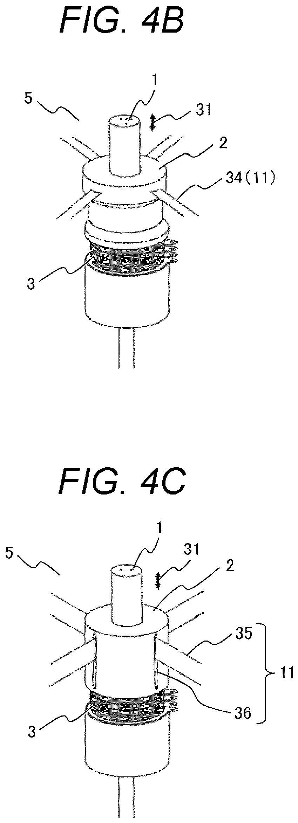

The atomization unit holding member 11 illustrated in FIG. 4B is the atomization unit holding member 11 that holds the ultrasonic sample liquid atomization unit 5 in the floating state, includes a plate-shaped member 34, and has flexibility. The plate-shaped member 34 has a length (thickness) in the ultrasonic vibration direction 31 shorter than ta length (width) in a direction orthogonal to the ultrasonic vibration direction 31. In other words, the plate-shaped member 34 has a small thickness and has a width in the direction orthogonal to the ultrasonic vibration direction 31. The plate-shaped member 34 is an elastic member having rigidity lower than the vibration member 2.

Since in the atomization unit holding member 11 illustrated in FIG. 4B, the thickness of the plate-shaped member 34 in the ultrasonic vibration direction 31 is small, the atomization unit holding member has low rigidity in the ultrasonic vibration direction 31, and can hold the ultrasonic sample liquid atomization unit 5 in the floating state or in a state extremely close to the floating state. Furthermore, in the atomization unit holding member 11 shown in FIG. 4B, since the plate-shaped member 34 has the width in the direction orthogonal to the ultrasonic vibration direction 31, an advantage is obtained that the effect of cooling the ultrasonic sample liquid atomization unit 5 can be enhanced by the gas (the transport gas 8 flowing in the ultrasonic vibration direction 31) flowing around the ultrasonic sample liquid atomization unit 5.

The atomization unit holding member 11 shown in FIG. 4C is the atomization unit holding member 11 that holds the ultrasonic sample liquid atomization unit 5 in the floating state, and is a sliding member including a groove 36 provided in the ultrasonic sample liquid atomization unit 5 and a holding member 35 having one end located in the groove 36. In other words, the atomization unit holding member 11 includes the holding member 35 slidable with respect to the groove 36 provided in the ultrasonic sample liquid atomization unit 5.

The groove 36 is an elongated groove extending in the ultrasonic vibration direction 31, and is provided in the vibration member 2, for example. The holding member 35 has a length (width) in the ultrasonic vibration direction 31 shorter than a length (thickness) in the direction orthogonal to the ultrasonic vibration direction 31. In other words, the holding member 35 has the small thickness and has the width in the direction orthogonal to the ultrasonic vibration direction 31. When the ultrasonic sample liquid atomization unit 5 vibrates, the holding member 35 can move in the groove 36 while sliding with respect to the groove 36.

The atomization unit holding member 11 illustrated in FIG. 4C can hold the ultrasonic sample liquid atomization unit 5 in the floating state or in a state extremely close to the floating state as a result of sliding of the holding member 35 with respect to the groove 36. Furthermore, in the atomization unit holding member 11 shown in FIG. 4C, since the holding member 35 has a small thickness in the direction orthogonal to the ultrasonic vibration direction 31, an advantage is obtained that the ultrasonic sample liquid atomization unit 5 can be cooled by the gas (the transport gas 8 flowing in the ultrasonic vibration direction 31) flowing around the ultrasonic sample liquid atomization unit 5.

The atomization unit holding members 11 illustrated in FIGS. 4A to 4C hold the ultrasonic sample liquid atomization unit 5 in the floating state at a position between the exciting part 3 of the ultrasonic sample liquid atomization unit 5 and the vibration surface 1.

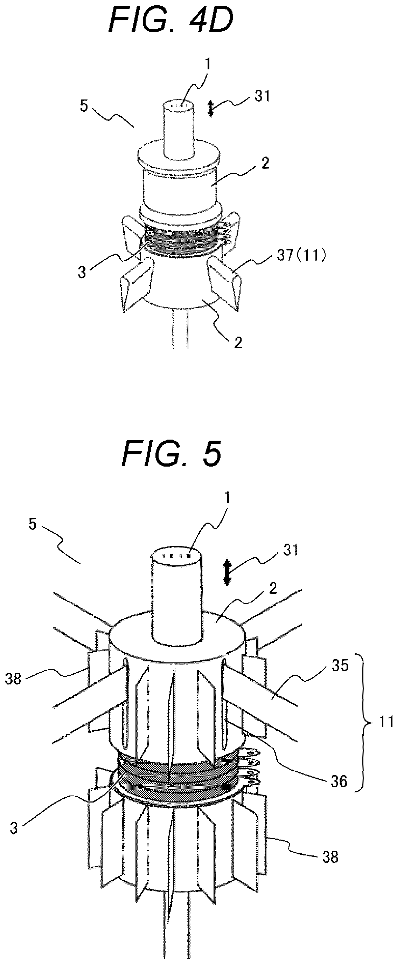

The atomization unit holding member 11 illustrated in FIG. 4D is a holding member 37 that supports the ultrasonic sample liquid atomization unit 5 at a position opposite to the vibration surface 1 with respect to the exciting part 3. The holding member 37 is, for example, a rigid member that is provided on the vibration member 2 and fixes the ultrasonic sample liquid atomization unit 5 to the first pipeline part 10. The holding member 37 is connected to the vibration member 2 between the other end of the vibration member 2 (the end opposite to the end where the vibration surface 1 is installed) and the exciting part 3. The holding member 37 is preferably streamlined in the ultrasonic vibration direction 31 so as not to disturb the flow of the gas (the transport gas 8 flowing in the ultrasonic vibration direction 31) flowing around the ultrasonic sample liquid atomization unit 5.

The atomization unit holding member 11 illustrated in FIG. 4D can hold the ultrasonic sample liquid atomization unit 5 in the floating state if the holding member 37 located on the opposite side of the vibration surface 1 with respect to the exciting part 3 can be brought to hardly vibrate by making a vibration mode of the ultrasonic sample liquid atomization unit 5 appropriate.

Returning to FIG. 1, the description of the ultrasonic sample liquid atomization unit 5 will be continued.

The first pipeline part 10 includes, at one end thereof, a pipe 8a through which the transport gas 8 flows. The pipe 8a allows the transport gas 8 to flow in the first pipeline part 10. In the first pipeline part 10, the transport gas 8 supplied to the pipe 8a flows in the ultrasonic vibration direction 31 (FIGS. 4A to 4D). The transport gas 8 flows in the ultrasonic vibration direction 31 and transports the sample droplet 14 in the downstream direction.

The sample liquid atomization part is configured such that the transport gas 8 flowing inside the first pipeline part 10 is supplied to the surroundings of the ultrasonic sample liquid atomization unit 5 via a rectification part 9. The rectification part 9 can be configured with, for example, a rectification plate.

The transport gas 8 also has an effect of cooling the ultrasonic sample liquid atomization unit 5 and the like heated by the ultrasonically vibrating piezoelectric element as a result of flowing around the ultrasonic sample liquid atomization unit 5. Since the ultrasonic sample liquid atomization unit 5 continuously atomizes the continuously supplied sample liquid 7, it is extremely important that the ultrasonic sample liquid atomization unit is cooled to efficiently discharge heat generated by the ultrasonic waves. In order to effectively cool the ultrasonic sample liquid atomization unit 5, one or both of the ultrasonic sample liquid atomization unit 5 and the atomization unit holding member 11 are preferably made of a member having high thermal conductivity, for example, metal.

The ultrasonic sample liquid atomization unit 5 can also include such a cooling structure as shown in FIG. 5.

FIG. 5 is a view showing one example of the ultrasonic sample liquid atomization unit 5 including a cooling structure. FIG. 5 illustrates an example in which the ultrasonic sample liquid atomization unit 5 illustrated in FIG. 4C includes the cooling structure. The ultrasonic sample liquid atomization units 5 shown in FIGS. 4A, 4B, and 4D may also include a cooling structure.

FIG. 5 illustrates the ultrasonic sample liquid atomization unit 5 configured to have an uneven part provided on a surface thereof as a cooling structure. The uneven part can be configured with, for example, a plurality of plate-shaped members 38 provided on a surface of the vibration member 2. The plate-shaped member 38 extends along a flowing direction of the transport gas 8 (the ultrasonic vibration direction 31), has a small thickness, and functions as a cooling fin. In the ultrasonic sample liquid atomization unit 5, when the vibration member 2 is configured with a member having high thermal conductivity and includes the plurality of thin plate-shaped members 38, a very high cooling effect can be obtained. Note that sufficient consideration is required for an influence of the uneven part (the plurality of plate-shaped members 38) as the cooling structure on a mode of the ultrasonic vibration and the like.

Although not shown in the figure, the atomization unit holding member 11 may include, on a surface thereof, an uneven part (e.g., a plurality of plate-shaped members) as a cooling structure. Only one of the ultrasonic sample liquid atomization unit 5 and the atomization unit holding member 11 may include the uneven part, or both may include the uneven part.

Returning to FIG. 1, the description of the ultrasonic sample liquid atomization unit 5 will be continued.

The transport gas 8 is supplied from an end of the first pipeline part 10 to the surroundings of the ultrasonic sample liquid atomization unit 5 via the rectification part 9, and has an effect of cooling the ultrasonic sample liquid atomization unit 5 and stably transporting the sample droplets 14 sprayed from the vibration surface 1 of the ultrasonic sample liquid atomization unit 5 along the first pipeline part 10. Since the sample droplet 14 may contain a flammable solvent such as alcohol, it is preferable to use an inert gas such as nitrogen or air as the transport gas 8. When an inert gas is used as the transport gas 8, it is possible to prevent the sprayed sample droplets 14 from igniting.

### <Heating Vaporization Part>

The heating vaporization part will be described with reference to FIG. 1. In the following description, "downstream" represents a flow direction regarding the direction in which the transport gas 8 flows (the ultrasonic vibration direction 31).

The heating vaporization part includes a second pipeline part 13, and heats and vaporizes the sample droplet 14 atomized by the first pipeline part 10. The second pipeline part 13 is a tubular member, and has one end connected to the first pipeline part 10 via a heat insulating connection member 12. The second pipeline part 13 is located on a downstream side of the first pipeline part 10, and is supplied with the sample droplet 14 sprayed by the sample liquid atomization part.

The second pipeline part 13 includes a heating part 15. The heating part 15 is configured to heat a wall surface of the second pipeline part 13 in order to heat and vaporize the sample droplet 14 atomized by the sample liquid atomization part. The heating part 15 can include, for example, a heater to which a power source 16 is connected. The heating part 15 heats and vaporizes the sample droplet 14 by heating the transport gas 8 that transports the atomized sample droplet 14. In addition, although not illustrated in FIG. 1, the second pipeline part 13 can include a temperature detection part that detects a temperature of the second pipeline part 13. The temperature detection part is configured to be able to adjust the temperature of the second pipeline part 13 to a predetermined temperature by controlling the heating part 15.

The first pipeline part 10 and the second pipeline part 13 are connected via the heat insulating connection member 12, and the second pipeline part 13 is installed on the downstream side of the first pipeline part 10. Therefore, the first pipeline part 10 is hardly affected by the heating of the second pipeline part 13. With this configuration, cooling of the ultrasonic sample liquid atomization unit 5 disposed inside the first pipeline part 10 and heating and vaporization of the atomized sample droplet 14 in the second pipeline part 13 can be efficiently realized.

In the example shown in FIG. 1, the second pipeline part 13 is installed on an upper side of the first pipeline part 10 in a direction of gravity. In this configuration, since the transport gas 8 flows upward from the first pipeline part 10 to the second pipeline part 13, the heated transport gas 8 becomes an ascending airflow to enable cooling of the ultrasonic sample liquid atomization unit 5 and heating and vaporization of the atomized sample droplets 14 to be executed more efficiently in a separate manner.

In the sample liquid atomization device according to the present embodiment, the second pipeline part 13 may not be installed on the upper side of the first pipeline part 10 in the direction of gravity due to constraints on the device configuration and the like, and the transport gas 8 may not flow upward from the first pipeline part 10 to the second pipeline part 13. The second pipeline part 13 can be installed at an arbitrary position with respect to the first pipeline part 10. Although there is a possibility that energy efficiency or the like is lowered as compared with the configuration illustrated in FIG. 1, by appropriately adjusting a flow rate of the transport gas 8, lengths of the first pipeline part 10 and the second pipeline part 13, a heating temperature by the heating part 15, and the like, the second pipeline part 13 can be disposed at an arbitrary position with respect to the first pipeline part 10 to effectively perform atomization of the sample liquid 7 in the first pipeline part 10 and heating vaporization of the sample droplet 14 in the second pipeline part 13.

The second pipeline part 13 is configured such that the transport gas 8 that transports the atomized sample droplet 14 is heated by the heating part 15 to heat and vaporize the sample droplet 14. When the atomized sample droplet 14 comes into contact with an inner wall surface of the heated second pipeline part 13, sample components contained in the sample droplet 14 may be broken by heat.

In the second pipeline part 13, since the wall surface is heated, the temperature of the wall surface is higher than a temperature at a radial center thereof, so that the transport gas 8 heated on the wall surface becomes an ascending airflow, and a flow velocity of the gas 8 on the wall surface is higher than a flow velocity of the gas 8 in the radial center. Since the flow velocity of the transport gas 8 on the wall surface is faster than the flow velocity at the radial center, it is possible to suppress the sample droplet 14 atomized at the radial center of the first pipeline part 10 from coming into contact with the heated wall surface of the second pipeline part 13. In addition, when a speed at which the transport gas 8 flows through the second pipeline part 13 is appropriately set, the flow velocity of the transport gas 8 on the wall surface of the second pipeline part 13 can be made higher more effectively than the flow velocity at the radial center.

Furthermore, as illustrated in FIG. 1, in the configuration in which the second pipeline part 13 is installed on the upper side of the first pipeline part 10 in the direction of gravity and the transport gas 8 is heated by the wall surface of the second pipeline part 13 to become an ascending airflow that flows to the upper side in the direction of gravity, it is possible to more easily and stably maintain a state in which the flow velocity of the transport gas 8 on the wall surface of the second pipeline part 13 is higher than the flow velocity of the transport gas 8 at the radial center. Also from this point, it can be said that the configuration in which the second pipeline part 13 is installed on the upper side of the first pipeline part 10 in the direction of gravity is not essential, but has many advantages.

In the ultrasonic sample liquid atomization unit 5 having such configuration as shown in FIG. 1, for example, a jetting speed of the atomized sample droplets 14 can be set to several 100 mm/s, and an average flow velocity of the transport gas 8 can be set to be about 1 m/s or less slightly higher than the jetting speed of the sample droplets 14. By making the flow velocity of the transport gas 8 be substantially equal to or slightly faster than the jetting speed of the sample droplet 14 from the ultrasonic sample liquid atomization unit 5, the atomized sample droplet 14 is smoothly and stably transported downstream through the second pipeline part 13 along a flow 17 of the transport gas 8.

In addition, in a case where the transport gas 8 is air or nitrogen, the second pipeline part 13 has an inner diameter of several cm, and the flow velocity of the transport gas 8 in the second pipeline part 13 is about 1 m/s, the Reynolds number is also a sufficiently small value. In other words, the transport gas 8 flows in a laminar flow state inside the second pipeline part 13. In the present embodiment, since the sprayed sample droplets 14 are smoothly transported by the flow 17 of the transport gas 8 flowing in the laminar flow state, the sample droplets 14 which are atomization of the sample liquid 7 containing different sample components continuously supplied are sequentially and continuously transported on the transport gas 8 without being mixed with each other.

When flowing through the second pipeline part 13 in the laminar flow state, the transport gas 8 is warmed by heat conduction from the heated wall surface of the second pipeline part 13 toward the radial center. In order to completely vaporize the sample droplet 14 transported by the transport gas 8, the temperature of the transport gas 8 at the radial center of the second pipeline part 13 needs to be higher than a vaporization temperature of a solvent of the sample droplet 14.

In a case where the inner diameter of the second pipeline part 13 was 2 cm and the temperature of the wall surface of the second pipeline part 13 was 500 °C, it has been confirmed that the sample droplets 14 inside the second pipeline part 13 could be vaporized when the length of the second pipeline part 13 was about 300 mm. In a case where the flow velocity of the transport gas 8 inside the second pipeline part 13 was 1 m/s, the heating time was 300 ms, and it has been confirmed that this heating time substantially matched a value estimated only from heat transfer calculation of the transport gas 8. This coincidence is because the diameter of the atomized sample droplets 14 is as small as 10 um or less, and the amount of the sample droplets 14 is sufficiently small with respect to an amount of the transport gas 8, so that vaporization energy and vaporization time of the atomized sample droplets 14 can be almost ignored with respect to energy for heating the transport gas 8.

From a viewpoint of implementation of the device, the length of the second pipeline part 13 is preferably as short as possible. As described above, in order to vaporize the sample droplet 14, the temperature of the transport gas 8 needs to be higher than the vaporization temperature of the solvent of the sample droplet 14. Also as described above, the transport gas 8 is used for cooling the ultrasonic sample liquid atomization unit 5 in the first pipeline part 10. Therefore, in order to shorten the length of the second pipeline part 13, it is necessary to efficiently warm the transport gas 8 sent from the first pipeline part 10 by the second pipeline part 13.

As described above, the transport gas 8 flows in the laminar flow state inside the second pipeline part 13 so that the sample droplets 14 containing different sample components do not mix with each other. Therefore, the transport gas 8 inside the second pipeline part 13 is warmed by heat transfer from the heated wall surface of the second pipeline part 13, and has the temperature decreasing toward the radial center of the second pipeline part 13.

As a method of increasing the temperature of the transport gas 8 even at the radial center of the second pipeline part 13 even when the length of the second pipeline part 13 is short, for example, there are the following three methods, i.e., a method of increasing a heating temperature of the second pipeline part 13, a method of reducing the flow velocity of the transport gas 8, and a method of reducing the inner diameter of the second pipeline part 13. The method of increasing the heating temperature of the second pipeline part 13 is not preferable because consumed energy is increased. The method of reducing the flow velocity of the transport gas 8 is not preferable because it is better that the flow velocity is high in order to transport the atomized sample droplet 14 as described above. In addition, the inner diameter of the second pipeline part 13 cannot be made too small. This is because the second pipeline part 13 needs to have an inner diameter of a size corresponding to the first pipeline part 10, and the first pipeline part 10 needs to have an inner diameter of a size enabling the ultrasonic sample liquid atomization unit 5 to be held therein. For example, when the ultrasonic sample liquid atomization unit 5 has an outer diameter of about 12 mm, the inner diameters of the first pipeline part 10 and the second pipeline part 13 are preferably 20 mm.

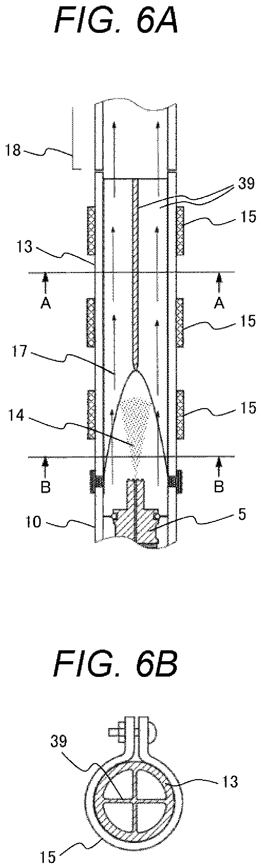

Because of the configuration illustrated in FIGS. 6A to 6C, the sample liquid atomization device according to the present embodiment enables the transport gas 8 to be efficiently warmed by the second pipeline part 13 even when the length of the second pipeline part 13 is short.

FIG. 6A is a view illustrating an example of a configuration of the second pipeline part 13, in which the length of the second pipeline part 13 can be reduced, and is a view illustrating a longitudinal cross section of the second pipeline part 13. FIG. 6B is a view showing a cross section taken along line A-A in FIG. 6A.

As illustrated in FIGS. 6A and 6B, the second pipeline part 13 includes a dividing wall 39 that divides an internal space into a plurality of spaces. The dividing wall 39 extends in the direction of the flow 17 of the transport gas 8, and divides the space inside the second pipeline part 13 into four in a circumferential direction, for example, as illustrated in FIG. 6B.

By dividing the internal space of the second pipeline part 13 into a plurality of spaces by the dividing wall 39, the substantial inner diameter of the second pipeline part 13 can be reduced, so that a distance required for the heat transfer by the transport gas 8 can be shortened to shorten the length of the second pipeline part 13. Since the second pipeline part 13 includes the dividing wall 39 therein, even if the length of the second pipeline part 13 is short, the transport gas 8 can be heated so that the temperature of the transport gas 8 is higher than the vaporization temperature of the solvent of the sample droplet 14.

It has been confirmed that the sample droplets 14 can be vaporized even if the length of the second pipeline part 13 is about 150 mm in a case where the second pipeline part 13 having an inner diameter of 20 mm is provided with the dividing wall 39 that divides the internal space of the second pipeline part 13 into four as shown in FIG. 6B, when the heating temperature is 300 °C. This is an effect close to that obtained in a case where the inner diameter of the second pipeline part 13 not including the dividing wall 39 is set to about 10 mm. In other words, by providing the dividing wall 39, an effect close to that obtained by halving the inner diameter of the second pipeline part 13 is obtained.

Note that a shape of the dividing wall 39 is not limited to the shape illustrated in FIGS. 6A and 6B, and may have any shape as long as the substantial inner diameter of the second pipeline part 13 can be reduced.

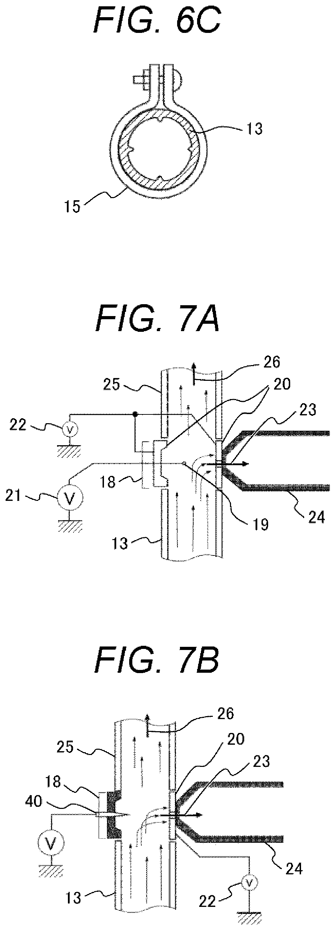

FIG. 6C is a view showing a cross section taken along line B-B in FIG. 6A. Although the dividing wall 39 extends in the direction of the flow 17 of the transport gas 8, the dividing wall is not provided in the vicinity of the ultrasonic sample liquid atomization unit 5 as illustrated in FIGS. 6A and 6C. This is to prevent the sample droplets 14 sprayed from the ultrasonic sample liquid atomization unit 5 from adhering to the dividing wall 39. The dividing wall 39 is heated to a high temperature similarly to the wall surface of the second pipeline part 13. When the sample droplet 14 adheres to the dividing wall 39, the sample liquid droplet may be decomposed and disappear due to high temperature. As shown in FIG. 6C, if the dividing wall 39 is not provided in the vicinity of the ultrasonic sample liquid atomization unit 5, most of the sample droplets 14 on the flow 17 of the transport gas 8 among the sample droplets 14 sprayed from the ultrasonic sample liquid atomization unit 5 can be transported inside the second pipeline part 13 without coming into contact with the dividing wall 39.

In order to efficiently heat the transport gas 8 that transports the sample droplet 14, the second pipeline part 13 and the dividing wall 39 are desirably made of a member having high thermal conductivity such as metal, for example.

### <Charge Applying Part>

Returning to FIG. 1, a charge applying part 18 will be described. The charge applying part 18 applies a positive or negative charge to a sample component contained in the sample droplet 14, which is the atomized sample liquid 7, and ionizes the sample component.

The charge applying part 18 is provided at the other end of the second pipeline part 13 (an end opposite to the one end connected to the first pipeline part 10), i.e., on a downstream side of the second pipeline part 13 so as to be connected to the second pipeline part 13. The charge applying part 18 applies a charge to a sample component contained in the sample droplet 14 vaporized by the second pipeline part 13, and ionizes the sample component. An exhaust pipe 25 is connected to a downstream side of the charge applying part 18. FIG. 1 illustrates the charge applying part 18 using corona discharge as an example.

Furthermore, the charge applying part 18 can be also provided to be connected to the second pipeline part 13 at the one end of the second pipeline part 13 connected to the first pipeline part 10.

The charge applying part 18 illustrated in FIG. 1 includes a tubular member, a thin discharge wire 19 having a thickness of about several 10 um, and a counter electrode 20. The counter electrode 20 is formed of a conductive member disposed on a part of a wall surface of the tubular member, and is electrically insulated from the second pipeline part 13 and the exhaust pipe 25.

A high-voltage power source 21 that applies a high voltage is connected to the discharge wire 19. When a high voltage is applied to the discharge wire 19, a potential difference between the discharge wire and the counter electrode 20 causes corona discharge. When a negative high voltage is applied to the discharge wire 19, electrons generated by the corona discharge flow toward a direction of the counter electrode 20, so that a negative charge can be applied to the sample component contained in the sample droplet 14 carried by the transport gas 8 from the second pipeline part 13. In addition, when a positive high voltage is applied to the discharge wire 19, positive ions generated by the corona discharge flow toward the direction of the counter electrode 20, so that a positive charge can be applied to the sample component contained in the sample droplet 14 carried by the transport gas 8 from the second pipeline part 13. By switching a polarity of the voltage to be applied to the discharge wire 19, the charge applying part 18 can apply a charge having a polarity corresponding to an analysis method or a type of the sample component to the sample component.

The sample component ionized by the charge is attracted toward the counter electrode 20 by a force of the electric field generated between the discharge wire 19 and the counter electrode 20. The counter electrode 20 is connected to the analysis part 24 and includes a small hole opened to the analysis part 24. A part of the ionized sample component is introduced into the analysis part 24 through the small hole provided in the counter electrode 20. In FIG. 1, a flow of the ionized sample component to the analysis part 24 is indicated by an arrow 23.

The analysis part 24 introduces the ionized sample components into a vacuum, separates the sample components for each mass-to-charge ratio using, for example, a mass spectrometry method, and identifies the components.

A control power source 22 capable of adjusting a potential of the counter electrode 20 may be connected to the counter electrode 20. By setting the potential of the counter electrode 20 to be slightly higher than an internal voltage of the analysis part 24 by the control power source 22, an electric field intensity toward the analysis part 24 can be increased, so that the ionized sample components easily enter the analysis part 24 through the small hole of the counter electrode 20. Note that when the potential of the counter electrode 20 is increased to be too high, an electric field from the discharge wire 19 toward the counter electrode 20 becomes weak, so that an amount of sample components introduced into the analysis part 24 decreases. In the present embodiment, the charge applying part 18 includes the control power source 22 capable of adjusting the potential of the counter electrode 20, and can adjust the potential of the counter electrode 20 so that the ionized sample component is more efficiently introduced into the analysis part 24.

The exhaust pipe 25 is provided at the downstream side of the charge applying part 18. The exhaust pipe 25 discharges the transport gas 8 after introducing the ionized sample component into the analysis part 24. In FIG. 1, a flow of the transport gas 8 discharged by the exhaust pipe 25 is indicated by an arrow 26.

FIGS. 7A to 7C are views illustrating a configuration example of the charge applying part 18. The charge applying part 18 can include an arbitrary configuration, and for example, can include such configurations as illustrated in FIGS. 7A to 7C.

FIG. 7A illustrates the charge applying part 18 having the same configuration as that of the charge applying part 18 illustrated in FIG. 1. The charge applying part 18 shown in FIG. 7A includes the discharge wire 19, and applies a charge to a sample component contained in the vaporized sample droplet 14 by using corona discharge.

FIG. 7B illustrates the charge applying part 18 including a needle-shaped member 40. The needle-shaped member 40 is a needle electrode (discharge electrode). The charge applying part 18 shown in FIG. 7B applies a charge to the sample component contained in the vaporized sample droplet 14 by using the needle-shaped member 40 to cause corona discharge.

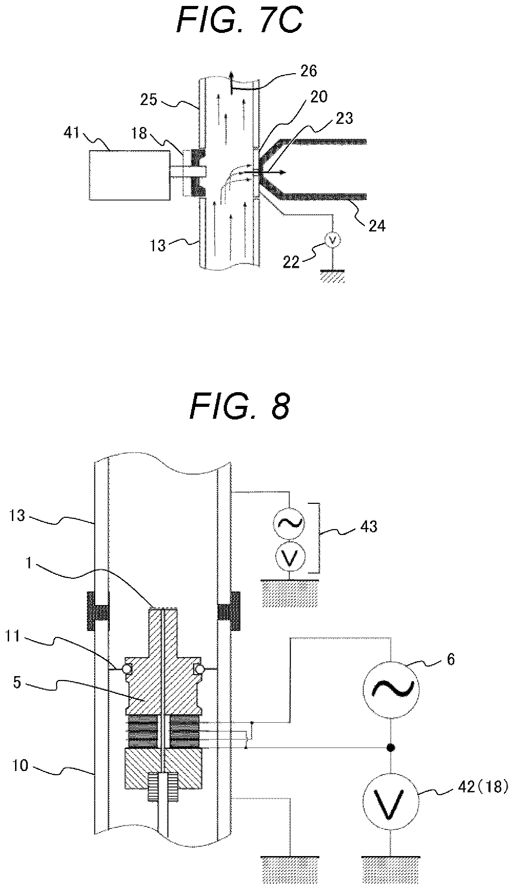

FIG. 7C illustrates the charge applying part 18 including an ion emission device 41 using plasma or the like. The charge applying part 18 illustrated in FIG. 7C applies a charge to the sample component contained in the vaporized sample droplet 14 using the ion emission device 41.

The charge applying part 18 described above heats and vaporizes the atomized sample droplet 14, and applies a charge to the sample component contained in the heated and vaporized sample droplet 14. The charge applying part 18 can also apply a charge to the sample component when atomizing the sample liquid 7.

FIG. 8 is a view illustrating a configuration of the charge applying part 18 that applies a charge to a sample component contained in the sample droplet 14 at the time of atomizing the sample liquid 7. The charge applying part 18 includes a high-voltage DC power source circuit 42. The high-voltage DC power source circuit 42 is a power source circuit that supplies a high voltage to the vibration surface 1 of the ultrasonic sample liquid atomization unit 5.

The high-voltage DC power source circuit 42 is connected to the ultrasonic sample liquid atomization unit 5 and applies a high voltage to a signal generated by the drive circuit 6 to raise an entire AC signal for driving the ultrasonic sample liquid atomization unit 5 to a high voltage. The drive circuit 6 ultrasonically drives the piezoelectric element in a state where a high voltage is applied by the high-voltage DC power source circuit 42. The vibration surface 1 of the ultrasonic sample liquid atomization unit 5 ultrasonically vibrates in the state where a high voltage is supplied by the high-voltage DC power source circuit 42.

Furthermore, the atomization unit holding member 11 that holds the ultrasonic sample liquid atomization unit 5 has an electrical insulating structure so that the ultrasonic sample liquid atomization unit 5 can be electrically separated from the wall surface of the first pipeline part 10. This electrical insulating structure can be made of an insulating material such as insulating elastic rubber.

The sample droplet 14 jetted from the ultrasonic sample liquid atomization unit 5 and atomized is charged by a potential difference generated between the vibration surface 1 to which a high voltage is supplied and the wall surface of the second pipeline part 13. The charged sample droplet 14 is attracted to the wall surface of the second pipeline part 13 by the electric field.

Therefore, as illustrated in FIG. 8, in the present embodiment, a AC voltage application circuit 43 may be connected to the wall surface of the second pipeline part 13. The AC voltage application circuit 43 applies an AC voltage having an offset voltage to the wall surface of the second pipeline part 13. When the AC voltage application circuit 43 applies the offset voltage and the AC voltage of appropriate values to the wall surface of the second pipeline part 13, the sample droplet 14 is transported in the downstream direction through the second pipeline part 13 by the transport gas 8 and vaporized without being attracted to the wall surface of the second pipeline part 13 even when a charge is applied.

As described in the foregoing, the sample liquid atomization device according to the present embodiment includes the sample liquid atomization part, the heating vaporization part, and the charge applying part, and can constitute a simple and very stable ion source for the analysis part 24. The analysis device according to the present embodiment includes the sample liquid atomization device, and can include a stable ion source.

Note that the present invention is not limited to the above embodiments, and allows various modifications. For example, the above embodiments have been described in detail in order to describe the present invention in an easy-to-understand manner, and the present invention is not necessarily limited to a mode including all the described configurations. Furthermore, a part of the configuration of a certain embodiment can be replaced with the configuration of another embodiment. In addition, the configuration of another embodiment can be also added to the configuration of a certain embodiment. In addition, a part of the configuration of each embodiment can be deleted, or other configuration can be added or replaced.

### Reference Signs List

- 1: vibration surface
- 2: vibration member
- 3: exciting part
- 4: connection part
- 5: ultrasonic sample liquid atomization unit
- 6: drive circuit
- 7: sample liquid
- 7a: pipe
- 8: transport gas
- 8a: pipe
- 9: rectification part
- 10: first pipeline part
- 11: atomization unit holding member
- 12: heat insulating connection member
- 13: second pipeline part
- 14: sample droplet
- 15: heating part
- 16: power source
- 17: flow of transport gas
- 18: charge applying part
- 19: discharge wire
- 20: counter electrode
- 21: high-voltage power source
- 22: control power source
- 23: arrow indicating flow of sample component
- 24: analysis part
- 25: exhaust pipe
- 26: arrow indicating flow of transport gas to be discharged
- 27: mesh thin plate
- 28: hole
- 29a,: 29b elastic body
- 30: retaining part
- 31: ultrasonic vibration direction
- 32: elastic rubber
- 33: bar-shaped member
- 34: plate-shaped member
- 35: holding member
- 36: groove
- 37: holding member
- 38: plate-shaped member
- 39: dividing wall
- 40: needle-shaped member
- 41: ion emission device
- 42: high-voltage DC power source circuit
- 43: AC voltage application circuit
- 44: holding frame

## Claims

1. A sample liquid atomization device comprising:
an ultrasonic sample liquid atomization unit including:
an exciting part that emits ultrasonic vibration; a vibration surface to be excited by the exciting part; a vibration member including the vibration surface; and a pipe that supplies a sample liquid to the vibration surface, the ultrasonic sample liquid atomization unit atomizing the sample liquid supplied to the vibration surface by the ultrasonic vibration of the vibration surface; and
a first pipeline part that is a tubular member,
wherein the first pipeline part extends in a direction of the ultrasonic vibration of the vibration surface, and
the ultrasonic sample liquid atomization unit is provided inside the first pipeline part and supported by a holding member in the first pipeline part.

2. The sample liquid atomization device according to claim 1, wherein the holding member connects the vibration member and the first pipeline part, and supports the ultrasonic sample liquid atomization unit such that the ultrasonic vibration of the ultrasonic sample liquid atomization unit is not transmitted to the first pipeline part.

3. The sample liquid atomization device according to claim 2, wherein the holding member includes an elastic member having rigidity lower than that of the vibration member.

4. The sample liquid atomization device according to claim 2, wherein the holding member includes a member slidable with respect to a groove provided in the vibration member.

5. The sample liquid atomization device according to claim 1,
Wherein the vibration member includes the vibration surface at one end, and includes the exciting part between the one end and an other end, and
the holding member is connected to the vibration member between the other end and the exciting part.

6. The sample liquid atomization device according to claim 1,
wherein the first pipeline part includes a pipe through which gas flows inside the first pipeline part, and
one or both of the ultrasonic sample liquid atomization unit and the holding member are made of metal.

7. The sample liquid atomization device according to claim 1,
wherein the first pipeline part includes a pipe through which gas flows inside the first pipeline part, and
one or both of the ultrasonic sample liquid atomization unit and the holding member includes an uneven part on surfaces thereof.

8. The sample liquid atomization device according to claim 1,
wherein the vibration surface includes a plate-shaped member having one or more holes on a surface thereof, and
the pipe supplies the sample liquid between the vibration surface and the plate-shaped member.

9. The sample liquid atomization device according to claim 1, comprising a second pipeline part that is a tubular member,
wherein the second pipeline part has one end connected to the first pipeline part via a heat insulating member, and includes a heating part that heats a wall surface of the second pipeline part.

10. The sample liquid atomization device according to claim 9, comprising at the one end or the other end of the second pipeline part, a charge applying part that applies a positive or negative charge to a sample component contained in the sample liquid atomized.

11. The sample liquid atomization device according to claim 1, comprising a power source circuit that supplies a voltage to the vibration surface.

12. An analysis device comprising the sample liquid atomization device according to any one of claims 1 to 11.
